# EUROPEAN PATENT SPECIFICATION

(11) **EP 4 057 703 B1**
(45) Date of publication and mention of the grant of the patent: **27.08.2025**
(21) Application number: 19951555.2
(22) Date of filing: 07.11.2019
(51) Int. Cl.: H04W 52/02, H04L 5/00, H04W 76/27, H04W 84/18, H04W 76/15, H04W 36/00

(54) **STATUS CONVERSION METHOD AND APPARATUS, AND COMMUNICATION DEVICE**
VERFAHREN UND VORRICHTUNG ZUR ZUSTANDSUMWANDLUNG SOWIE KOMMUNIKATIONSGERÄT
PROCÉDÉ ET APPAREIL DE CONVERSION D'ÉTAT, ET DISPOSITIF DE COMMUNICATION

(43) Date of publication of application: 14.09.2022
(73) Proprietor: GUANGDONG OPPO MOBILE TELECOMMUNICATIONS CORP., LTD., Dongguan, Guangdong 523860 (CN)
(72) Inventor: WANG, Shukun, Dongguan, Guangdong 523860 (CN)
(74) Representative: Penza, Giancarlo
(86) International application number: PCT/CN2019/116375
(87) International publication number: WO 2021/087898

(56) References cited:
- WO-A1-2019/089125
- CN-A- 104 737 599
- CN-A- 106 465 263
- US-A1- 2017 223 763
- QUALCOMM INCORPORATED: "Introducing suspension of SCG", vol. RAN WG2, no. Prague, Czech; 20190826 - 20190830, 16 August 2019 (2019-08-16), XP051766504, Retrieved from the Internet <URL:http://www.3gpp.org/ftp/tsg_ran/WG2_RL2/TSGR2_107/Docs/R2-1908679.zip> [retrieved on 20190816]
- CATT: "Dormant SCG state", vol. RAN WG2, no. Chongqing, P.R.China; 20191014 - 20191018, 3 October 2019 (2019-10-03), pages 1 - 4, XP051790171, Retrieved from the Internet <URL:http://www.3gpp.org/ftp/tsg_ran/WG2_RL2/TSGR2_107bis/Docs/R2-1912118.zip> [retrieved on 20191003]
- INTERDIGITAL (RAPPORTEUR): "Report on email discussion on [107#32][NR/DCCA] MCG SCell/SCG Resume", vol. RAN WG2, no. Chongqing, China; 20191014 - 20191018, 4 October 2019 (2019-10-04), XP051804694, Retrieved from the Internet <URL:https://ftp.3gpp.org/tsg_ran/WG2_RL2/TSGR2_107bis/Docs/R2-1912880.zip R2-1912880 - Email discussion report 107_32_NR_DCCA_MCG SCell_SCGresume_summary.docx> [retrieved on 20191004]
- QUALCOMM INCORPORATED: "RRC_INACTIVE with MR_DC", vol. RAN WG3, no. Qingdao, China; 20170627 - 20170629, 20 June 2017 (2017-06-20), XP051308067, Retrieved from the Internet <URL:http://www.3gpp.org/ftp/tsg_ran/WG3_Iu/TSGR3_AHGs/R3_AH_NR_1706/Docs/> [retrieved on 20170620]
- ZTE CORPORATION ET AL: "On SCG Suspension", vol. RAN WG2, no. Chongqing, China; 20190914 - 20190918, 4 October 2019 (2019-10-04), XP051791490, Retrieved from the Internet <URL:http://www.3gpp.org/ftp/tsg_ran/WG2_RL2/TSGR2_107bis/Docs/R2-1913491.zip> [retrieved on 20191004]
- CATT: "Dormant SCG state", 3GPP DRAFT; R2-1912118, vol. RAN WG2, 3 October 2019 (2019-10-03), Chongqing, P.R.China, pages 1 - 4, XP051790171

## Description

### Technical Field

Embodiments of the present application relate to the field of mobile communication technologies, and more specifically, to a status transition method, a status transition apparatus, and a communication device.

### Background

In order to support energy saving of a terminal device and quick establishment of a Secondary Cell Group (SCG), a concept of dormancy SCG is proposed. The dormancy SCG means that all cells in the SCG are in a dormancy state, and a cell in the dormancy state may be referred to as a dormancy cell. In a dormancy cell, a terminal device does not monitor a Physical Downlink Control Channel (PDCCH) and does not send or receive data, but performs Radio Resource Management (RRM)/ Channel Status Indicator (CSI) measurement and beam management, etc. Therefore, how to support the dormancy SCG is a problem to be solved.

The documents R2-1908679, R2-1912118, R3-172430 and R2-1912880 have disclosed the related art of the present disclosure.

The document US 2017/223763 A1 discloses a method for operating a network node in a wireless communication network, the network node being connected to a terminal via a first cell group. The method comprises receiving, by the network node, information indicating an activation status of the terminal regarding a second cell group, wherein the method further comprises transmitting, by the network node, further information based on the received information to the terminal and/or one or more further network nodes.

The document R2-1913491 provides further consideration on two potential options of SCG suspension.

### Summary

Embodiments of the present application provide a status transition method, a status transition apparatus and a communication device.

The invention is set out in the appended set of claims.

A status transition method according to an embodiment of the present application includes: receiving, by a master node, first indication information sent by a secondary node, wherein the first indication information is used for indicating that a service on a secondary node side is inactive; and sending, by the master node, first confirmation information to the secondary node if the master node determines that there is no downlink data to be forwarded to the secondary node and/or no uplink data sent from the secondary node, wherein the first confirmation information is used for triggering a Secondary Cell Group (SCG) to enter a dormancy state.

A status transition method according to an embodiment of the present application includes: sending, by a secondary node, first indication information to a master node, wherein the first indication information is used for indicating that a service on a secondary node side is inactive; and triggering an SCG to enter a dormancy state if the secondary node receives first confirmation information sent by the master node.

A status transition method according to an embodiment of the present application includes: when an SCG is in a dormancy state or an inactive state, if a master node determines that there are downlink data to be forwarded to a secondary node or the master node receives a third notification message sent by a terminal device, the third notification message being used for informing the master node to trigger the SCG to enter the non-dormancy state, then the master node sends a first request message to the secondary node, wherein the first request message is used for requesting the SCG to enter the non-dormancy state or the active state.

A status transition method according to an embodiment of the present application includes: when an SCG is in a dormancy state or an inactive state, if a secondary node determines that there are downlink data arriving at the secondary node, the secondary node triggers the SCG to enter a non-dormancy state or an active state.

A status transition method according to an embodiment of the present application includes: if a terminal device determines that there are uplink data to be sent to the secondary node, the terminal device sends a third notification message to a master node, wherein the third notification message is used for informing the master node to trigger an SCG to enter a non-dormancy state or an active state.

A status transition apparatus according to an embodiment of the present application includes: a receiving unit, which is configured to receive first indication information sent by a secondary node, wherein the first indication information is used for indicating that a service on a secondary node side is inactive; a determining unit, which is configured to determine that there is no downlink data to be forwarded to the secondary node and/or no uplink data sent from the secondary node; and a sending unit, which is configured to send first confirmation information to the secondary node, wherein the first confirmation information is used for triggering an SCG to enter a dormancy state.

A status transition apparatus according to an embodiment of the present application includes: a sending unit, which is configured to send first indication information to a master node, wherein the first indication information is used for indicating that a service on a secondary node side is inactive; and a receiving unit, which is configured to trigger an SCG to enter a dormancy state if receiving first confirmation information sent by the master node.

A status transition apparatus according to an embodiment of the present application includes: a sending unit, which is configured, when an SCG is in a dormancy state or an inactive state, if a master node determines that there are downlink data to be forwarded to a secondary node or the master node receives a third notification message sent by a terminal device, the third notification message being used for informing the master node to trigger the SCG to enter a non-dormancy state, then to send a first request message to a secondary node, wherein the first request message is used for requesting the SCG to enter the non-dormancy state or an active state.

A status transition apparatus according to an embodiment of the present application includes: a trigger unit, which is configured, when an SCG is in a dormancy state or an inactive state, if there are downlink data arriving at the secondary node is determined, to trigger the SCG to enter a non-dormancy state or an active state.

A status transition apparatus according to an embodiment of the present application includes: a determining unit, which is configured to determine that there are uplink data to be sent to a secondary node; and a sending unit, which is configured to send a third notification message to a master node, wherein the third notification message is used for informing the master node to trigger an SCG to enter a non-dormancy state or an active state.

A communication device according to an embodiment of the present application includes a processor and a memory. The memory is configured to store a computer program, and the processor is configured to call and run the computer program stored in the memory to implement the status transition method described above.

A chip according to an embodiment of the present application is configured to implement the status transition method described above.

Specifically, the chip includes a processor configured to call and run a computer program from a memory to enable a device disposed with the chip to implement the state transition method described above.

An embodiment of the present application provides a computer readable storage medium configured to store a computer program, and the computer program enables a computer to implement the status transition method described above.

An embodiment of the present application provides a computer program product including computer program instructions, and the computer program instructions enable a computer to implement the state transition method described above.

An embodiment of the present application provides a computer program that, when running on a computer, enables the computer to implement the state transition method described above.

Through the above technical solution, the process and behavior of the network side during the transition between the dormancy state and the non-dormancy state of the SCG are clarified, so that the network side may effectively support the function of the dormancy SCG.

### Brief Description of Drawings

FIG. 1 is a schematic diagram of an architecture of a communication system according to an embodiment of the present application.
FIG. 2 is a network deployment and networking architecture diagram of EN-DC according to an embodiment of the present application.
FIG. 3-1 is a first schematic diagram of BWP according to an embodiment of the present application.
FIG. 3-2 is a second schematic diagram of BWP according to an embodiment of the present application.
FIG. 3-3 is a third schematic diagram of BWP in accordance with an embodiment of the present application.
FIG. 4 is a first schematic flowchart of a status transition method according to an embodiment of the present application.
FIG. 5 is a flowchart of interactions in a first example according to an embodiment of the present application.
FIG. 6 is a second schematic flowchart of a status transition method according to an embodiment of the present application.
FIG. 7 is a third schematic flowchart of a status transition method according to an embodiment of the present application.
FIG. 8 is a flowchart of interactions in a second example according to an embodiment of the present application.
FIG. 9 is a flowchart of interactions in a third example according to an embodiment of the present application.
FIG. 10 is a flowchart of interactions in a fourth example according to an embodiment of the present application.
FIG. 11 is a first schematic diagram of a structure of a status transition apparatus according to an embodiment of the present application.
FIG. 12 is a second schematic diagram of a structure of a status transition apparatus according to an embodiment of the present application.
FIG. 13 is a third schematic diagram of a structure of a status transition apparatus according to an embodiment of the present application.
FIG. 14 is a fourth diagram of a structure of a status transition apparatus according to an embodiment of the present application.
FIG. 15 is a fifth schematic diagram of a structure of a status transition apparatus according to an embodiment of the present application.
FIG. 16 is a schematic structural diagram of a communication device according to an embodiment of the present application.
FIG. 17 is a schematic structural diagram of a chip according to an embodiment of the present application.
FIG. 18 is a schematic block diagram of a communication system according to an embodiment of the present application.

### Detailed Description

Technical solutions in embodiments of the present application will be described below with reference to the drawings of the embodiments of the present application. It is apparent that the embodiments described are just a part of embodiments of the present application, but not all of the embodiments of the present application. Embodiments of the invention are those whose scope is within that of the appended claims. Other passages stating embodiments which do not fall under the scope of the appended claims are to be considered as examples.

The technical solutions of the embodiments of the present application may be applied to various communication systems, such as a Long Term Evolution (LTE) system, an LTE Frequency Division Duplex (FDD) system, an LTE Time Division Duplex (TDD) system, a system, a 5G system or a future communication system.

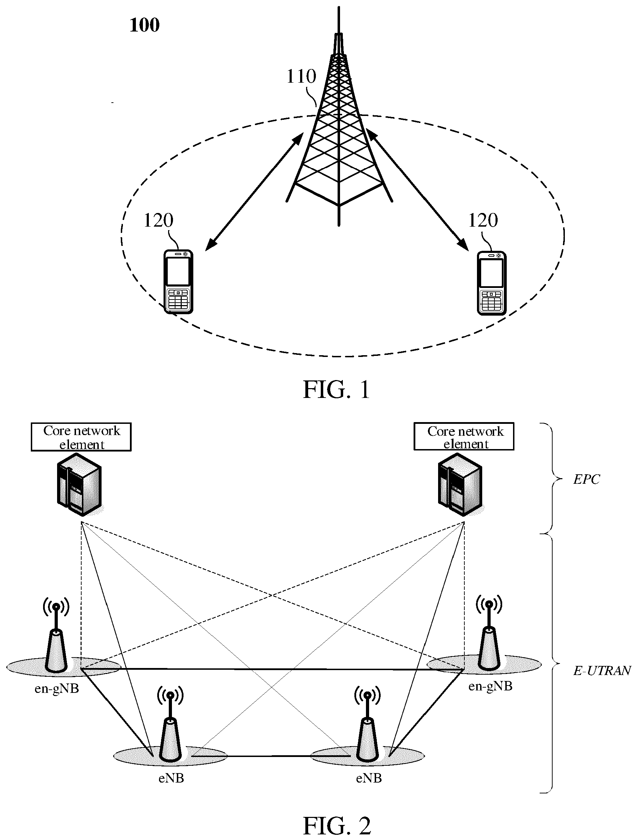

Exemplarily, a communication system 100 to which an embodiment of the present application is applied is shown in FIG. 1. The communication system 100 may include a network device 110. The network device 110 may be a device that communicates with a terminal 120 (or referred to as a communication terminal, or a terminal). The network device 110 may provide communication coverage for a specific geographical area, and may communicate with a terminal located within the coverage area. Optionally, the network device 110 may be an Evolutional Node B (eNB or eNodeB) in an LTE system, or a radio controller in a Cloud Radio Access Network (CRAN), or the network device may be a mobile switching center, a relay station, an access point, a vehicle-mounted device, a wearable device, a hub, a switch, a bridge, a router, a network side device in a 5G network, or a network device in a future communication system, etc.

The communication system 100 further includes at least one terminal 120 located within the coverage area of the network device 110. The "terminal" as used herein includes, but is not limited to, an apparatus configured to receive/send communication signals via a wired line connection, for example, via a Public Switched Telephone Networks (PSTN), a Digital Subscriber Line (DSL), a digital cable, or a direct cable; and/or another data connection/network; and/or via a wireless interface, for example, for a cellular network, a Wireless Local Area Network (WLAN), a digital television network such as a Digital Video Broadcasting-Handheld (DVB-H) network, a satellite network, or an Amplitude Modulation - Frequency Modulation (AM-FM) broadcast transmitter; and/or another terminal; and/or an Internet of Things (IoT) device. A terminal configured to communicate via a wireless interface may be referred to as "a wireless communication terminal", "a wireless terminal", or "a mobile terminal". Examples of the mobile terminal include, but are not limited to, a satellite or cellular phone; a Personal Communications System (PCS) terminal which may combine a cellular radio phone with data processing, facsimile, and data communication abilities; a Personal Digital Assistant (PDA) that may include a radio phone, a pager, internet/intranet access, a Web browser, a memo pad, a calendar, and/or, a Global Positioning System (GPS) receiver; and a conventional laptop and/or palmtop receiver, or another electronic apparatus including a radio phone transceiver. The terminal may refer to an access terminal, a User Equipment (UE), a subscriber unit, a subscriber station, a mobile station, a mobile platform, a remote station, a remote terminal, a mobile device, a user terminal, a terminal, a wireless communication device, a user agent, or a user apparatus. The access terminal may be a cellular phone, a cordless phone, a Session Initiation Protocol (SIP) phone, a Wireless Local Loop (WLL) station, a Personal Digital Assistant (PDA), a handheld device with a wireless communication function, a computing device, or another processing device connected to a wireless modem, a vehicle-mounted device, a wearable device, a terminal in a 5G network, or a terminal in future evolved Public Land Mobile Network (PLMN), etc.

Optionally, Device to Device (D2D) communication may be performed between terminals 120.

Optionally, a 5G communication system or a 5G network may also be referred to as a New Radio (NR) system or an NR network.

FIG. 1 illustrates exemplarily one network device and two terminals. Optionally, the communication system 100 may include a plurality of network devices, and other numbers of terminals may be included within a coverage area of each network device, which is not limited in the embodiments of the present application.

Optionally, the communication system 100 may further include another network entity, such as a network controller, a mobile management entity, or the like, which is not limited in the embodiments of the present application.

It should be understood that a device with a communication function in a network/system in the embodiments of the present application may also be referred to as a communication device. Taking the communication system 100 shown in FIG. 1 as an example, the communication device may include a network device 110 and a terminal 120 which have communication functions, and the network device 110 and the terminal 120 may be specific devices described above, and will not be described repeatedly herein. The communication device may further include another device in the communication system 100, such as a network controller, a mobile management entity, and another network entity, which is not limited in the embodiments of the present application.

It should be understood that the terms "system" and "network" may often be used interchangeably herein. The term "and/or" herein is an association relation describing associated objects only, indicating that three relations may exist, for example, A and/or B may indicate three cases: A alone, both A and B, and B alone. In addition, the symbol "/" in this document generally indicates that objects before and after the symbol "/" have an "or" relationship.

In order to facilitate understanding of the technical solutions of the embodiments of the present application, the technical solutions related to the embodiments of the present application will be explained below.

With people's pursuit for rate, latency, high-speed mobility, and energy efficiency, and diversity and complexity of services in the future life, for this, 3rd Generation Partnership Project (3GPP) International Standardization Organization began the research and the development of 5G. Main application scenarios of the 5G are: enhanced Mobile Broadband (eMBB), Ultra-Reliable Low-Latency Communications (URLLC), massive Machine-Type Communication (mMTC).

On one hand, the eMBB still aims at enabling users to obtain multimedia contents, services, and data, and demands thereof are growing very rapidly. On the other hand, because eMBBs may be deployed in different scenarios, such as indoor, an urban district, a rural area, or the like, and differences in their capabilities and demands are also relatively large, they cannot be generalized, and must be analyzed in detail in combination with specific deployment scenarios. Typical applications of the URLLC include: industrial automation, power automation, telemedicine operation (surgery), traffic safety guarantee, or the like. Typical characteristics of the mMTC include: a high connection density, a small data volume, a latency-insensitive service, a low cost and a long service life of modules, or the like.

In an early deployment of the NR, a complete NR coverage is difficult to acquire, so typical network coverage is wide-area LTE coverage and an isolated island coverage mode of the NR. Moreover, a large amount of LTE deployments are below 6GHz, and there are few spectrums below 6GHz which may be used for the 5G. Therefore, spectrum applications above 6GHz must be studied for the NR, while coverage of high frequent band is limited, and signals fade of the high frequent band are fast. Meanwhile front-end investments of mobile operators in LTE needs to be protected, so a working mode of tight interworking between LTE and NR is proposed.

In order to implement the deployment and commercial application of 5G networks as soon as possible, the 3GPP completed the first 5G release, namely, LTE-NR Dual Connectivity (EN-DC). In the EN-DC, an LTE base station (eNB) is used as a Master Node (MN) and an NR base station (gNB or en-gNB) is used as a Secondary Node (SN). The network deployment and networking architecture of the EN-DC are shown in FIG. 2, in which an Evolved Universal Terrestrial Radio Access Network (E-UTRAN) represents an access network part, an Evolved Packet Core network (EPC) represents a core network part. The access network part consists of at least one eNB (two eNBs are schematically shown in FIG. 2) and at least one en-gNB (two en-gNBs are schematically shown in FIG. 2), wherein the eNB is used as the MN, the en-gNB is used as the SN, and both the MN and the SN are connected to the EPC. In a later stage of R15, other DC modes, i.e., NE-DC, 5GC-EN-DC, and NR DC, will be supported. For the EN-DC, a core network, to which the access network is connected, is an EPC, while for the other DC modes, the core network connected is a 5GC.

Herein, the MN is mainly responsible for an RRC control function and a control plane leading to CN, and the SN may configure an auxiliary signaling, such as SRB3, mainly providing a data transmission function.

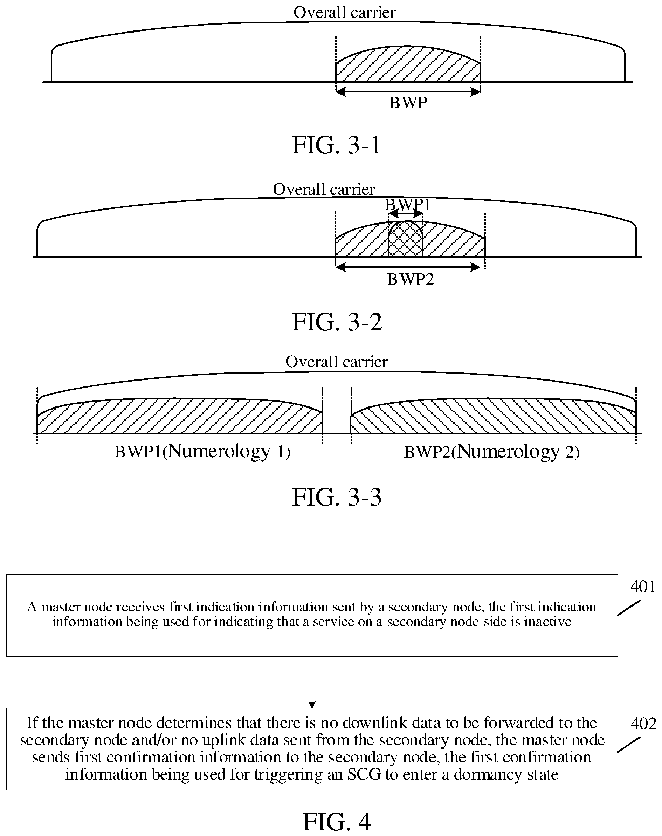

In 5G, the maximum channel bandwidth may be 400MHz (referred to as a wideband carrier), and the bandwidth of the wideband carrier is very large compared with the maximum bandwidth of LTE of 20MHz. If the terminal device keeps working on the wideband carrier, the power consumption of the terminal device is very large. Therefore, it is suggested that the Radio Frequency (RF) bandwidth of the terminal device may be adjusted according to an actual throughput of the terminal device. So, the concept of BWP is introduced, and the motivation of BWP is to optimize the power consumption of the terminal device. For example, if the rate of the terminal device is very low, a smaller BWP may be configured for the terminal device (as shown in FIG. 3-1), and if the rate requirement of the terminal device is very high, a larger BWP may be configured for the terminal device (as shown in FIG. 3-2). If the terminal device supports high rate or works in a Carrier Aggregation (CA) mode, the terminal device may be configured with multiple BWPs (as shown in FIG. 3-3). Another purpose of BWP is to trigger coexistence of multiple numerologies in a cell. As shown in FIG. 3-3, BWP1 corresponds to numerology 1 and BWP2 corresponds to numerology 2.

A terminal may be configured with up to four uplink BWPs and up to four downlink BWPs through a Radio Resource Control (RRC) dedicated signaling, but only one of the uplink BWPs and only one of the downlink BWPs may be activated at the same time. In the RRC dedicated signaling, the first activated BWP among the configured BWPs may be indicated. And when the terminal is in a connected state, the BWP may also be switched between different BWPs through Downlink Control Information (DCI). When an inactive carrier enters an active state, the first activated BWP is the first activated BWP configured in the RRC dedicated signaling. Configuration parameters of each BWP include the following:
- a subcarrier spacing;
- a cyclic Prefix;
- a first Physical Resource Block (PRB) of the BWP and the number of consecutive PRBs (location and bandwidth);
- a BWP identifier (bwp-Id);
- a BWP Common configuration parameter and a BWP Dedicated configuration parameter (bwp-Common, bwp-Dedicated).

In a process of Radio Link Monitor (RLM), the terminal only performs the RLM on the activated BWP, while there is no necessary to perform the RLM on the inactivated BWP, and during switching between different BWPs, there is also no necessary to reset the timer and counter related to the RLM. For RRM measurement, no matter on which activated BWP the terminal sends and receives data, it will not affect RRM measurement. For CQI measurement, the terminal only needs to perform the CQI measurement on the activated BWP.

When a carrier is deactivated and then activated by a Media Access Control Control Element (MAC CE), the initial first activated BWP is a first activated BWP configured in the RRC dedicated signaling.

The value of a BWP identifier (BWP id) in the RRC dedicated signaling is 0 to 4, and the BWP with the BWP ID of 0 is the initial BWP by default.

In DCI, the BWP indicator has 2 bits, as shown in Table 1 below. If the number of the configured BWPs is less than or equal to 3, then the BWP indicator equal to 1, 2 and 3 correspond to the BWP ID equal to 1, 2 and 3 respectively. If the number of the BWPs is 4, then BWP indicator equal to 0, 1, 2, and 3 respectively correspond to BWPs configured according to sequential indices. Furthermore, the network side uses continuous BWP IDs when the BWPs are configured.

**Table 1**

| Value of the BWP indicator (2 bits) | BWP |
|---|---|
| 00 | First BWP configured by the high-levels |
| 01 | Second BWP configured by the high-levels |
| 10 | Third BWP configured by the high-levels |
| 11 | Fourth BWP configured by the high-levels |

In order to meet the demand of high rate, CA technology is also supported in 5G. In the CA, an NR system may support a larger bandwidth by jointly scheduling and using resources on multiple component carriers (CC), so as to be capable of achieving a higher system peak rate. According to continuity of aggregated carriers on the spectrum, the Carrier Aggregation may be classified into continuous carrier aggregation and non-continuous carrier aggregation. According to whether bands where aggregated carriers are located are the same, the Carrier Aggregation may be classified into intra-band carrier aggregation and inter-band carrier aggregation.

In the CA, there is only one Primary Cell Component (PCC), which provides RRC signaling connection, non-access stratum (NAS) function, security function and so on. A Physical Uplink Control Channel (PUCCH) exists only on the PCC. Secondary Cell Component (SCC) only provides additional wireless resources. The PCC and the SCC are both referred to as serving cells, in which the cell on the PCC is the Primary cell (Pcell) and the cell on the SCC is the Scell. The standard further specified that a maximum quantity of aggregated carriers is 5, that is, a maximum bandwidth after aggregation is 100MHz, and aggregated carriers belong to a same base station. All aggregated carriers use a same Cell-Radio Network Temporary Identifier (C-RNTI), and the base station ensures that the C-RNTI does not conflict in a cell where each carrier is located. Since both asymmetric carrier aggregation and symmetric carrier aggregation are supported, it is required that aggregated carriers must have downlink, and may have no uplink. Furthermore, for a PCC cell, there must be a PDCCH and a PUCCH of this cell, and only the primary carrier cell has the PUCCH.

In order to support energy saving of a terminal device and quick establishment of an SCG, the concept of dormancy SCG is proposed, and the dormancy SCG means that all cells in the SCG are in a dormancy state, and a cell in the dormancy state may be referred to as a dormancy cell. The terminal does not monitor the PDCCH in the dormancy cell, and does not send and receive data, but performs RRM/CSI measurement and beam management, etc. Therefore, how to support the dormancy SCG is a problem to be solved. To this end, following technical solutions of the embodiments of the present application are proposed.

FIG. 4 is a first schematic flowchart of a status transition method in accordance with an embodiment of the present application, and as shown in FIG. 4, the status transition method includes the following acts.

In act 401, a master node receives first indication information, which is sent by a secondary node, wherein the first indication information is used for indicating that a service on a secondary node side is inactive.

Technical solution of embodiments of the present application may be applied but is not limited to a dual connectivity architecture, e.g., a multiple connectivity architecture. In the dual connectivity architecture or multi connectivity architecture, a cell set covered by a Master Node (MN) is referred to as a Master Cell Group (MCG), and a cell set covered by a secondary node (SN) is referred to as an SCG. The MCG includes one Primary Cell (PCell) and at least one secondary cell (SCell). The SCG includes one Primary Secondary cell (PScell) and at least one Secondary Cell (SCell).

For an SCG on the secondary node side, the dormancy state is supported. In an embodiment of the present application, the SCG in the dormancy state is referred to as a dormancy SCG, the SCG in the non-dormancy state is referred to as a non-dormancy SCG, and the SCG in an active state is referred to as an active SCG. Optionally, the non-dormancy SCG and the active SCG may refer to the same state.

In an embodiment of the present application, 1) if the secondary node does not receive, via an SCG bearer, the downlink data from a core network or the uplink data from a terminal device, the secondary node sends the first indication information to the master node; or, 2) if the secondary node does not receive, via an SCG bearer, the downlink data from the core network, and one or more BSRs from the terminal device for the SCG bearer are zero, the secondary node sends the first indication information to the master node. Herein the first indication information is used for indicating that the service on the secondary node side is inactive.

In act 402, if the master node determines that there is no downlink data to be forwarded to the secondary node and/or no uplink data sent from the secondary node, the master node sends first confirmation information to the secondary node, wherein the first confirmation information is used for triggering the SCG to enter the dormancy state.

In an alternative embodiment, the master node starts a first timer after receiving the first indication information sent by the secondary node; if the master node does not receive the downlink data, from the core network, to be forwarded to the secondary node and/or the uplink data from the secondary node before the first timer times out, the master node sends the first confirmation information to the secondary node.

In an embodiment of the present application, determining, by the master node, that there is no downlink data to be forwarded to the secondary node and/or no uplink data sent from the secondary node, includes:
the master node determines that there is no downlink data to be forwarded to the secondary node on a split bearer terminated by the master node; and/or,
the master node determines that the BSR corresponding to the split bearer terminated by the master node is 0.

For the secondary node, if the secondary node receives a first confirmation message sent by the master node, the SCG is triggered to enter the dormancy state.

In an alternative embodiment, the master node sends second indication information to the terminal device, wherein the second indication information is used for informing the terminal device that the SCG enters the dormancy state. Furthermore, optionally, the second indication information is carried by an RRC signaling or a MAC CE or a PDCCH on the master node side.

The technical solutions of the embodiments of the present application will be illustrated below with reference to specific examples.

### Example 1

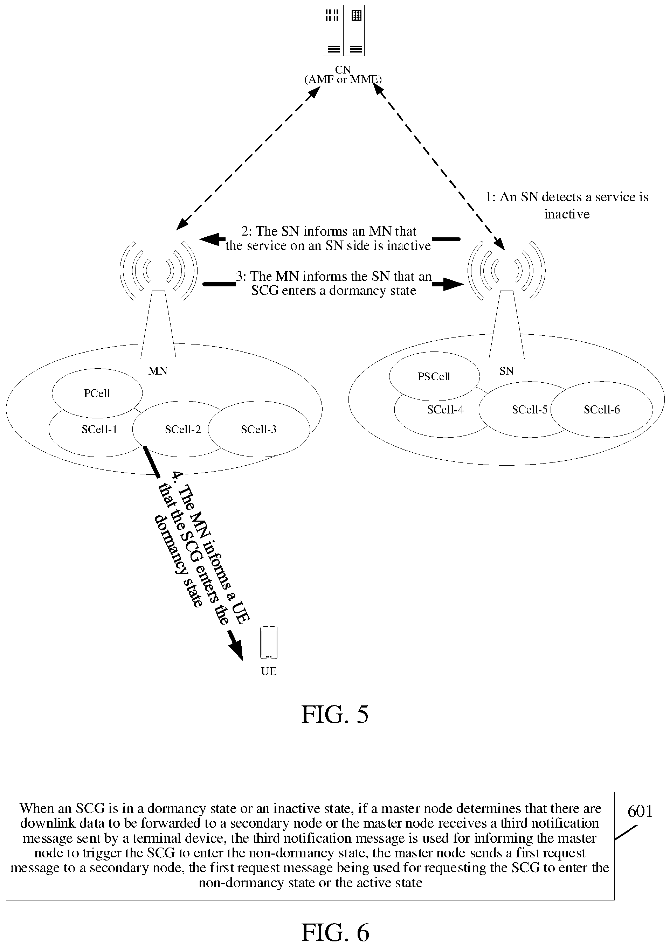

Referring to FIG. 5, a status transition method in this example includes the following flow.
1. SN detects that the service is inactive.
   Herein, if the SN does not receive, on the SCG RLC bearer, the downlink data from CN, and does not receive the uplink data from UE, or the BSR corresponding to the SCG RLC bearer on uplink is 0 (or the BSRs are 0 for several times), the SN informs the MN that the service on the SN side is inactive (see the following act 2).
2. SN informs the MN that the service on the SN side is inactive.

Herein, the SN informing the MN that the service on the SN side is inactive may be replaced by the SN informing the MN that the dormancy condition on the SN side is met.

Specifically, after receiving the indication that the service on the SN side is inactive sent by the SN, if the MN judges that there is no downlink data to be forwarded to the SN on the split bearer terminated by the MN, then the MN may decide to let the SCG into the dormancy state. Alternatively, in this process, the MN starts the first timer after receiving the indication that the service on the SN side is inactive, and if there is no downlink data to be forwarded to the SN on the split bearer terminated by the MN, which is received from the CN, before the first timer times out, then the MN may decide to let the SCG into the dormancy state.

3. MN informs the SN that the SCG enters the dormancy state.

Herein, the MN informing the SN that the SCG enters the dormancy state may also be understood as the MN sending the SN the first confirmation information that is used for triggering SCG to enter the dormancy state. It should be understood that the first confirmation information is used for confirming the dormancy decision.

Specifically, the MN informs the SN that SCG enters the dormancy state through an Xn/X2 interface signaling.

4. MN informs the UE that the SCG enters the dormancy state.

Specifically, the MN informs the UE that the SCG enters the dormancy state through an RRC signaling on the MN side or the MN MAC CE or the MN PDCCH.

FIG. 6 is a second schematic flowchart of a status transition method in accordance with an embodiment of the present application, and as shown in FIG. 6, the status transition method includes the following acts.

In act 601, when an SCG is in a dormancy state or an inactive state, if a master node determines that there are downlink data to be forwarded to a secondary node or the master node receives a third notification message sent by a terminal device, which is used for informing the master node to trigger the SCG to enter a non-dormancy state, the master node sends a first request message to the secondary node, wherein the first request message is used for requesting the SCG to enter the non-dormancy state or the active state.

In an embodiment of the present application, there are two application scenarios for triggering the SCG to enter the non-dormancy state or the active state, which are described in detail below.
➢Scenario 1: a network triggers the SCG to enter the non-dormancy state or the active state.

Herein, the master node triggers the SCG to enter the non-dormancy state or the active state.

When the SCG is in the dormancy state or the inactive state, if the master node determines that there are downlink data to be forwarded to the secondary node, the master node sends a first request message to the secondary node, wherein the first request message is used for requesting the SCG to enter the non-dormancy state or the active state.

Herein, determining, by the master node, that there are downlink data to be forwarded to the secondary node, includes: the master node determines that the downlink data arrive via a split bearer terminated by the master node, and/or determines that the SCG bearer is needed to transmit the downlink data.

In an alternative embodiment, the first request message carries a measurement result of the terminal device, wherein the measurement result of the terminal device includes at least one of the following: a measurement result of an SCG serving cell, a measurement result of an SCG serving frequency, and all measurement results of the terminal device. Furthermore, optionally, the measurement result includes at least one of the following: an RSRP measurement result, an RSRQ measurement result and an SINR measurement result.

In an embodiment of the present application, the measurement result is used for the secondary node to decide whether to change the PSCell; and the method further includes that the master node receives a first notification message sent by the secondary node, wherein the first notification message is used for informing the master node whether to change the PSCell. Furthermore, optionally, when the first notification message informs the master node of the change of the PSCell, the first notification message carries identification information of the changed PSCell. Herein, the identification information of the PSCell includes at least one of a physical cell identifier (PCI), a frequency and a serving cell index. For example, identification information of the PSCell is PCI plus frequency information, or the serving cell index.

In an alternative embodiment, the master node sends a second notification message to the terminal device, wherein the second notification message is used for informing the terminal device that the SCG enters the non-dormancy state or the active state. Furthermore, the second notification message is further used for informing the terminal device whether to change the PSCell. Herein, optionally, when the second notification message informs the terminal device of changing of the PSCell, the second notification message carries identification information of the changed PSCell. Herein, the identification information of the PSCell includes at least one of the following: the PCI, the frequency and the serving cell index. For example, the identification information of the PSCell is PCI plus frequency information, or the serving cell index.
➢Scenario 2: the terminal device triggers the SCG to enter the non-dormancy state or the active state.

When the SCG is in the dormancy state or the inactive state, if the master node receives third notification message sent by a terminal device, which is used for informing the master node to trigger the SCG to enter the non-dormancy state, the master node sends a first request message to the secondary node, wherein the first request message is used for requesting the SCG to enter the non-dormancy state or the active state.

In an embodiment of the present application, if the terminal device determines that there are uplink data sent to the secondary node, the terminal device sends a third notification message to the master node, wherein the third notification message is used for informing the master node to trigger the SCG to enter the non-dormancy state or the active state.

Herein, determining, by the terminal device, that there are uplink data sent to the secondary node, includes: the terminal device determines that there are uplink data to be transmitted on the SCG bearer.

In an alternative embodiment, the third notification message is carried by the RRC signaling or the MAC CE on the master node side.

In an alternative embodiment, the third notification message contains N bearer identifiers, wherein N is an integer greater than or equal to 0, and the bearer identifier is configured to indicate a DRB identifier of a bearer on which there is uplink data sending.

In an alternative embodiment, the first request message carries a measurement result of the terminal device, wherein the measurement result of the terminal device includes at least one of the following: a measurement result of an SCG serving cell, a measurement result of an SCG serving frequency, and all measurement results of the terminal device. Furthermore, optionally, the measurement result includes at least one of the following: an RSRP measurement result, an RSRQ measurement result and an SINR measurement result.

In an embodiment of the present application, the measurement result is used for the secondary node to decide whether to change the PSCell; and the method further includes that the master node receives a first notification message sent by the secondary node, wherein the first notification message is used for informing the master node whether to change the PSCell. Furthermore, optionally, when the first notification message informs the master node of changing of the PSCell, the first notification message carries identification information of the changed PSCell. Herein, the identification information of the PSCell includes at least one of a PCI, a frequency and a serving cell index. For example, the identification information of the PSCell is PCI plus frequency information, or is the serving cell index.

In an alternative embodiment, the master node sends a second notification message to the terminal device, wherein the second notification message is used for informing the terminal device that the SCG enters the non-dormancy state or the active state. Furthermore, the second notification message is further used for informing the terminal device whether to change the PSCell. Herein, optionally, when the second notification message informs the terminal device of changing of the PSCell, the second notification message carries identification information of the changed PSCell. Herein, the identification information of the PSCell includes at least one of a PCI, a frequency and a serving cell index. For example, the identification information of the PSCell is PCI plus frequency information, or is the serving cell index.

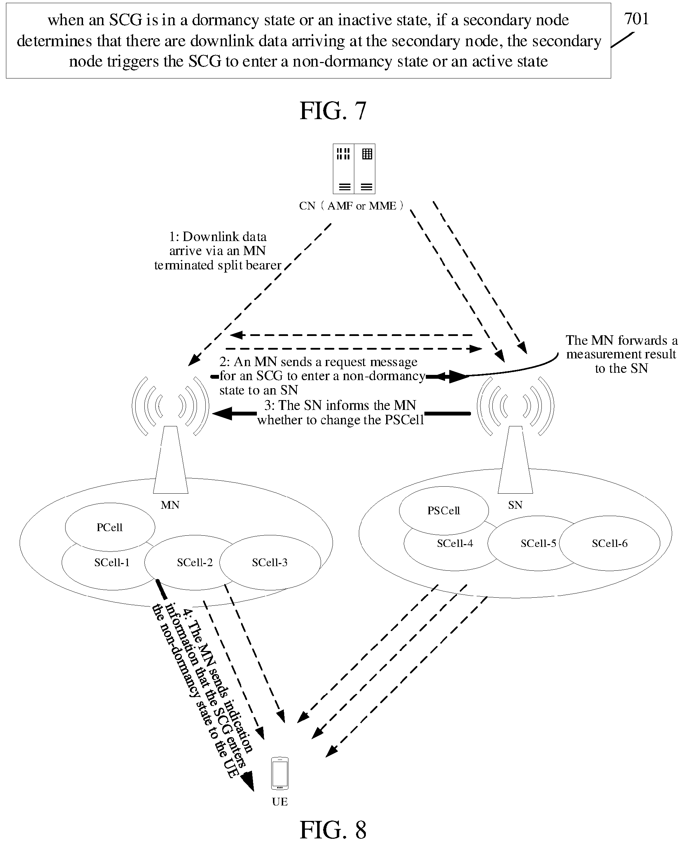

FIG. 7 is a third schematic flowchart of a status transition method in accordance with an embodiment of the present application, and as shown in FIG. 7, the status transition method includes the following acts.

In act 701, when an SCG is in a dormancy state or an inactive state, if a secondary node determines that there are downlink data arriving at the secondary node, the secondary node triggers the SCG to enter a non-dormancy state or an active state.

Herein, determining, by the secondary node, that there are downlink data arriving at the secondary node, includes: the secondary node determines that there are downlink data arriving via the SCG bearer or the split bearer by terminated the secondary node.

In this embodiment of the application, the secondary node may obtain the measurement result of the terminal device in any of the following ways to decide whether to change the PSCell.

In a first mode, before the secondary node triggers the SCG to enter the non-dormancy state or the active state, the secondary node receives the measurement result of the terminal device sent by the master node, wherein the measurement result of the terminal device includes at least one of the following: the measurement result of the SCG serving cell, the measurement result of the SCG service frequency, and all the measurement results of the terminal device.

Furthermore, optionally, the measurement result includes at least one of the following: an RSRP measurement result, an RSRQ measurement result and an SINR measurement result.

In a second mode, the secondary node sends a second request message to the master node, wherein the second request message is used for requesting the SCG to enter the inactive state. Furthermore, optionally, the second request message carries third indication information, wherein the third indication information is used for indicating a measurement result requested by the secondary node. The secondary node receives the measurement result of the terminal device sent by the master node, wherein the measurement result of the terminal device includes at least one of the following: the measurement result of the SCG serving cell, the measurement result of the SCG service frequency, and all the measurement results of the terminal device.

Furthermore, optionally, the measurement result includes at least one of the following: an RSRP measurement result, an RSRQ measurement result and an SINR measurement result.

In an embodiment of the present application, the measurement result is used for the secondary node to decide whether to change the PSCell; and the method further includes that the master node receives a first notification message sent by the secondary node, wherein the first notification message is used for informing the master node whether to change the PSCell. Furthermore, optionally, when the first notification message informs the master node of changing of the PSCell, the first notification message carries identification information of the changed PSCell. Herein, the identification information of the PSCell includes at least one of a PCI, a frequency and a serving cell index. For example, the identification information of the PSCell is PCI plus frequency information, or is the serving cell index.

In an alternative embodiment, the master node sends a second notification message to the terminal device, wherein the second notification message is used for informing the terminal device that the SCG enters the non-dormancy state or the active state. Furthermore, the second notification message is further used for informing the terminal device whether to change the PSCell. Herein, optionally, when the second notification message informs the terminal device of changing of the PSCell, the second notification message carries identification information of the changed PSCell. Herein, the identification information of the PSCell includes at least one of a PCI, a frequency and a serving cell index. For example, the identification information of the PSCell is PCI plus frequency information, or is the serving cell index.

The technical solutions of the embodiments of the present application will be illustrated below with reference to specific examples.

### Example 2

Referring to FIG. 8, a status transition method in this example includes the following flow.
1. DL data arrive via a split bearer terminated by an MN, and the MN triggers an SCG to enter the non-dormancy state.

It should be noted that the non-dormancy state in this example may be replaced by the active state.

Specifically, if the DL data arrive the split bearer terminated by the MN and/or need to use the SCG RLC bearer, the MN triggers the SCG to enter the non-dormancy state.

2. The MN sends a request message of the SCG entering the non-dormancy state to an SN.

Herein, it may be understood that the request message is used for informing the SN to resume the state of SCG, that is, the MN informs the SN to resume the SCG from Dormancy.

Optionally, the request message carries the measurement result of the UE, wherein the measurement result contains at least one of the following: a measurement result of an SCG serving cell, a measurement result of an SCG serving frequency, and all measurement results of the UE. The measurement result includes at least one of the following: an RSRP measurement result, an RSRQ measurement result and an SINR measurement result.

3. According to the measurement result, the SN decides whether to change the PSCell, and the SN informs the MN whether to change the PSCell.

Herein, if the PSCell is changed, the SN indicates identification information of a new PScell to the MN, wherein the identification information may be a PCI and a frequency, or a serving cell index.

Then, the MN sends confirmation information that the SCG enters the non-dormancy state to the SN.

4. The MN sends indication information that the SCG enters the non-dormancy state to the UE.

Herein, if the PSCell is changed, the MN indicates identification information of a new PScell to the UE, wherein the identification information may be a PCI and a frequency, or a serving cell index.

### Example 3

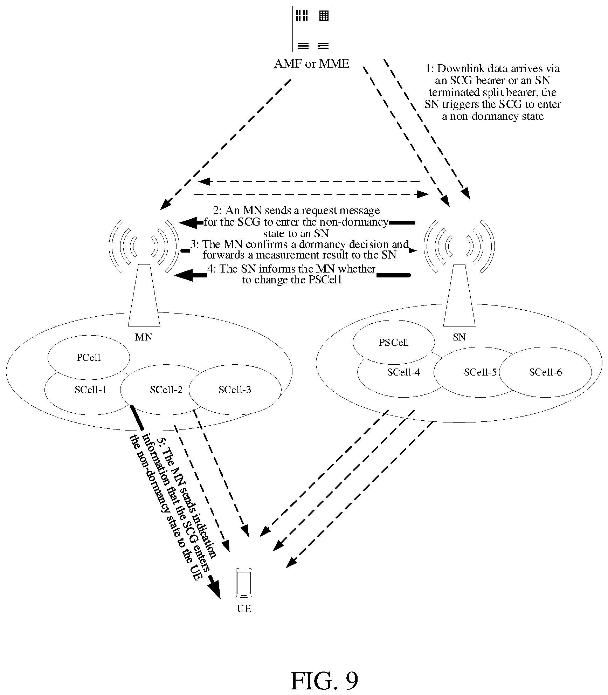

Referring to FIG. 9, a status transition method in this example includes the following flow.
1. When downlink data arrives via an SCG bearer or an SN terminated split bearer, the SN triggers the SCG to enter a non-dormancy state.
   It should be noted that the non-dormancy state in this example may be replaced by the active state.
2. Perform the following two act branches:
   In branch (a), before act 1, if an MN has forwarded a measurement result of UE to the SN, then according to the measurement results, the SN decides whether to change a PSCell, and the SN informs the MN whether to change the PSCell. Herein, if the PSCell is changed, the SN indicates identification information of a new PScell to the MN, wherein the identification information may be a PCI and a frequency, or a serving cell index. The measurement result contains at least one of the following: a measurement result of an SCG serving cell, a measurement result of an SCG serving frequency, and all measurement results of the UE. The measurement result includes at least one of the following: an RSRP measurement result, an RSRQ measurement result and an SINR measurement result. Then, it proceeds to act 5 below.

In branch (b), an MN sends a request message of an SCG to enter the non-dormancy state to an SN.

Optionally, the request message carries an indication to request a measurement result. Then it proceeds to act 3 below.

3. The MN confirms a dormancy decision and forwards the measurement result to the SN.

Herein, the measurement result is configured to assist the SN to confirm whether the original PSCell is valid or to select a new PSCell (the SN decides whether it is necessary to change the PSCell according to the measurement result). The measurement result contains at least one of the following: a measurement result of an SCG serving cell, a measurement result of an SCG serving frequency, and all measurement results of the UE. Wherein, the measurement result includes at least one of the following: an RSRP measurement result, an RSRQ measurement result and an SINR measurement result.

4. According to the measurement result, the SN decides whether to change the PSCell, and the SN informs the MN whether to change the PSCell.

Herein, if the PSCell is changed, the SN indicates identification information of a new PScell to the MN, wherein the identification information may be a PCI and a frequency, or a serving cell index.

Then, the MN sends confirmation information that the SCG enters the non-dormancy state to the SN.

5. The MN sends indication information that the SCG enters the non-dormancy state to the UE.

Herein, if the PSCell is changed, the MN indicates identification information of a new PScell to the UE, wherein the identification information may be a PCI and a frequency, or a serving cell index.

### Example 4

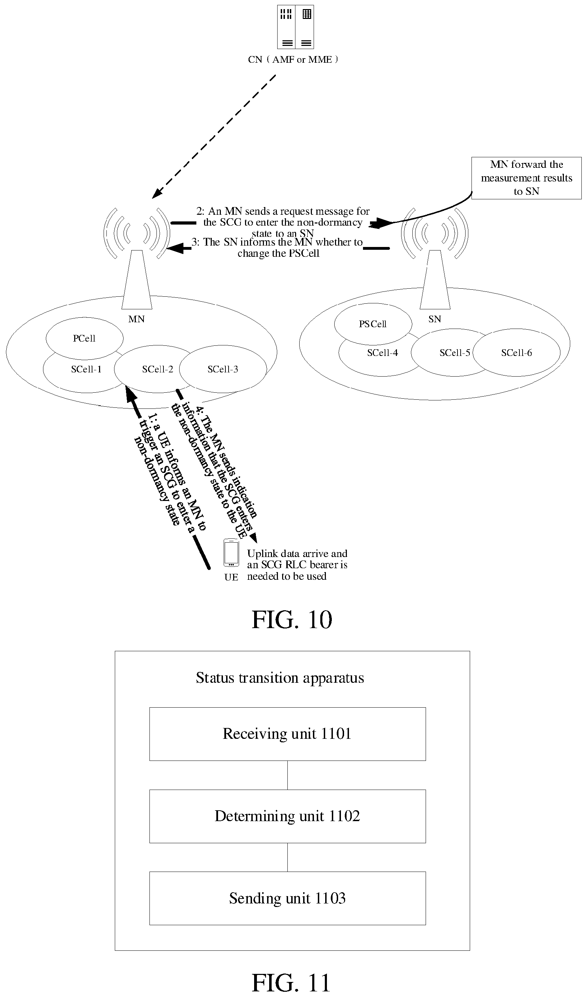

Referring to FIG. 10, a status transition method in this example includes the following flow.
1. If uplink data arrive and an SCG RLC bearer needs to be used, a UE informs an MN to trigger an SCG to enter a non-dormancy state.

It should be noted that the non-dormancy state in this example may be replaced by the active state.

Herein, the UE may inform the MN triggering the SCG to enter the non-dormancy state through the MN RRC or the MN MAC CE.

2. The MN sends a request message of the SCG entering the non-dormancy state to an SN.

Herein, it may be understood that the request message is used for informing an SN to resume the state of the SCG, that is, the MN informs the SN to resume the SCG from Dormancy.

Optionally, the request message carries the measurement result of the UE, wherein the measurement result contains at least one of the following: a measurement result of an SCG serving cell, a measurement result of an SCG serving frequency, and all measurement results of the UE. The measurement result includes at least one of the following: an RSRP measurement result, an RSRQ measurement result and an SINR measurement result.

3. According to the measurement result, the SN decides whether to change the PSCell, and the SN informs the MN whether to change the PSCell.

Herein, if the PSCell is changed, the SN indicates identification information of a new PScell to the MN, wherein the identification information may be a PCI and a frequency, or a serving cell index.

Then, the MN sends confirmation information that the SCG enters the non-dormancy state to the SN.

4. The MN sends indication information that the SCG enters the non-dormancy state to the UE.

Herein, if the PSCell is changed, the MN indicates identification information of a new PScell to the UE, wherein the identification information may be a PCI and a frequency, or a serving cell index.

FIG. 11 is a first schematic diagram of a structure of a status transition apparatus according to an embodiment of the present application, which is applied to a master node. As shown in FIG. 11, the status transition apparatus includes a receiving unit 1101, a determining unit 1102 and a sending unit 1103.

The receiving unit 1101 is configured to receive first indication information sent by a secondary node, wherein the first indication information is used for indicating that a service on the secondary node side is inactive.

The determining unit 1102 is configured to determine that there is no downlink data to be forwarded to the secondary node and/or no uplink data sent from the secondary node.

The sending unit 1103 is configured to send first confirmation information to the secondary node, where the first confirmation information is used for triggering an SCG to enter a dormancy state.

In an alternative embodiment, the receiving unit 1101 starts a first timer after receiving the first indication information sent by the secondary node; if downlink data from a core network to be forwarded to the secondary node and/or the uplink data from the secondary node are not received before the first timer times out, the sending unit 1103 sends the first confirmation information to the secondary node.

In an alternative embodiment, the sending unit 1103 is further configured to send second indication information to a terminal device, wherein the second indication information is used for informing the terminal device that the SCG enters the dormancy state.

In an alternative embodiment, the second indication information is carried by an RRC signaling or a MAC CE or a PDCCH on the master node side.

In an alternative embodiment, the determining unit 1102 is configured to determine that there is no downlink data to be forwarded to the secondary node on a split bearer terminated by the master node; and/or to determine that a BSR corresponding to the split bearer terminated by the master node is 0.

Those skilled in the art should understand that the relevant description of the status transition apparatus above-mentioned in the embodiments of the present application may be understood with reference to the relevant description of the status transition method in the embodiments of the present application.

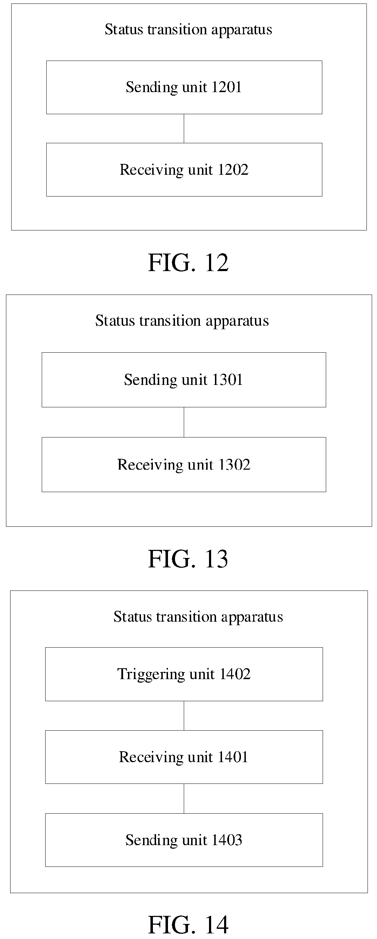

FIG. 12 is a second schematic diagram of a structure of a status transition apparatus according to an embodiment of the present application, which is applied to a secondary node. As shown in FIG. 12, the status transition apparatus includes a sending unit 1201 and a receiving unit 1202.

The sending unit 1201 is configured to send first indication information to a master node, wherein the first indication information is used for indicating that a service on the secondary node side is inactive.

The receiving unit 1202 is configured to trigger an SCG to enter a dormancy state if receiving first confirmation information sent by the master node.

In an alternative embodiment, the sending unit 1201 is configured to send the first indication information to the master node if the secondary node does not receive, via an SCG bearer, downlink data from a core network or uplink data from a terminal device; or, the sending unit 1201 is configured to send the first indication information to the master node if the secondary node does not receive, via an SCG bearer, the downlink data from the core network, and one or more BSRs from the terminal device for the SCG bearer are zero.

Those skilled in the art should understand that the relevant description of the status transition apparatus above-mentioned in the embodiments of the present application may be understood with reference to the relevant description of the status transition method in the embodiments of the present application.

FIG. 13 is a third schematic diagram of a structure of a status transition apparatus according to an embodiment of the present application, which is applied to a master node. As shown in FIG. 13, the status transition apparatus includes:
a sending unit 1301, which is configured to, when an SCG is in a dormancy state or an inactive state, if a master node determines that there are downlink data to be forwarded to the secondary node or the master node receives third notification message sent by a terminal device, which is used for informing the master node to trigger the SCG to enter the non-dormancy state, then send a first request message to the secondary node, wherein the first request message is used for requesting the SCG to enter the non-dormancy state or the active state.

In an alternative embodiment, the first request message carries a measurement result of the terminal device, wherein the measurement result of the terminal device includes at least one of the following:
a measurement result of an SCG serving cell, a measurement result of an SCG serving frequency, and all measurement results of the terminal device.

In an alternative embodiment, the measurement result includes at least one of the following: an RSRP measurement result, an RSRQ measurement result and an SINR measurement result.

In an alternative embodiment, the measurement result is used by the secondary node to decide whether to change a PSCell; the apparatus further includes:
a receiving unit 1302, which is configured to receive a first notification message sent by the secondary node, wherein the first notification message is used for informing the master node whether to change the PSCell.

In an alternative embodiment, when the first notification message informs the master node of changing of the PSCell, the first notification message carries identification information of the changed PSCell.

In an alternative embodiment, the sending unit 1301 is further configured to send a second notification message to the terminal device, wherein the second notification message is used for informing the terminal device that the SCG enters the non-dormancy state or the active state.

In an alternative embodiment, the second notification message is further used for informing the terminal device whether to change the PSCell.

In an alternative embodiment, when the second notification message informs the terminal device of changing of the PSCell, the second notification message carries identification information of the changed PSCell.

In an alternative embodiment, the master node determines that there are downlink data to be forwarded to the secondary node, which includes:
the master node determines that the downlink data arrive via the split bearer terminated by the master node, and/or determines that the SCG bearer is needed to transmit the downlink data.

In an alternative embodiment, the identification information of the PSCell includes at least one of a PCI, a frequency and a serving cell index.

Those skilled in the art should understand that the relevant description of the status transition apparatus in the embodiments of the present application may be understood with reference to the relevant description of the status transition method in the embodiments of the present application.

FIG. 14 is a fourth schematic diagram of a structure of a status transition apparatus according to an embodiment of the present application, which is applied to a secondary node. As shown in FIG. 14, the status transition apparatus includes: a trigger unit 1401, which is configured to, when an SCG is in a dormancy state or an inactive state, if determining there are downlink data arriving at the secondary node, then trigger the SCG to enter a non-dormancy state or an active state.

In an alternative embodiment, the apparatus further includes a receiving unit 1402.

The receiving unit 1402 is configured to receive a measurement result of the terminal device sent by the master node before the trigger unit triggers the SCG to enter the non-dormancy state or the active state, wherein the measurement result of the terminal device includes at least one of the following:
a measurement result of an SCG serving cell, a measurement result of an SCG serving frequency, and all measurement results of the terminal device.

In an alternative embodiment, the apparatus further includes a sending unit 1403.

The sending unit 1403 is configured to send a second request message to the master node, wherein the second request message is used for requesting the SCG to enter the inactive state.

In an alternative embodiment, the second request message carries third indication information, wherein the third indication information is used for indicating a measurement result requested by the secondary node.

In an alternative embodiment, the apparatus further includes a receiving unit 1402.

The receiving unit 1402 is configured to receive the measurement result of the terminal device sent by the master node, wherein the measurement result of the terminal device includes at least one of the following:
a measurement result of an SCG serving cell, a measurement result of an SCG serving frequency, and all measurement results of the terminal device.

In an alternative embodiment, the measurement result includes at least one of the following: an RSRP measurement result, an RSRQ measurement result and an SINR measurement result.

In an alternative embodiment, the measurement result is used by the secondary node to decide whether to change a PSCell; the apparatus further includes a sending unit 1403.

The sending unit 1403 is configured to send a first notification message to the master node, wherein the first notification message is used for informing the master node whether to change the PSCell.

In an alternative embodiment, when the first notification message informs the master node of changing of the PSCell, the first notification message carries identification information of the changed PSCell.

In an alternative embodiment, the apparatus further includes a sending unit 1403.

The sending unit 1403 is configured to send a second notification message to the terminal device, wherein the second notification message is used for informing the terminal device that the SCG enters the non-dormancy state or the active state.

In an alternative embodiment, the second notification message is further used for informing the terminal device whether to change the PSCell.

In an alternative embodiment, when the second notification message informs the terminal device of changing of the PSCell, the second notification message carries identification information of the changed PSCell.

In an alternative embodiment, the apparatus further includes a determining unit.

The determining unit (not shown in the figure) is configured to determine there are downlink data arriving via an SCG bearer or a split bearer terminated by the secondary node.

In an alternative embodiment, the identification information of the PSCell includes at least one of a PCI, a frequency and a serving cell index.

Those skilled in the art should understand that the relevant description of the status transition apparatus in the embodiments of the present application may be understood with reference to the relevant description of the status transition method in the embodiments of the present application.

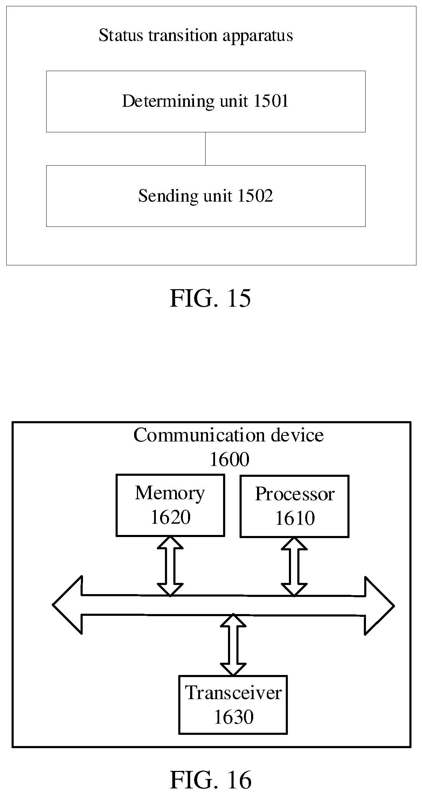

FIG. 15 is a fifth schematic diagram of a structure of a status transition apparatus according to an embodiment of the present application, which is applied to a terminal device. As shown in FIG. 15, the status transition apparatus includes a determining unit 1501 and a sending unit 1502.

The determining unit 1501 is configured to determine that there are uplink data to be sent to a secondary node.

The sending unit 1502 is configured to send a third notification message to a master node, wherein the third notification message is used for informing the master node to trigger an SCG to enter a non-dormancy state or an active state.

In an alternative embodiment, the third notification message is carried by an RRC signaling or a MAC CE on a master node side.

In an alternative embodiment, the third notification message contains N bearer identifiers, wherein N is an integer greater than or equal to 0, and the bearer identifier is configured to indicate a DRB identifier of a bearer on which there is uplink data sending.

In an alternative embodiment, the determining unit 1501 is configured to determine that there are uplink data to be transmitted on the SCG bearer.

Those skilled in the art should understand that the relevant description of the status transition apparatus above-mentioned in the embodiments of the present application may be understood with reference to the relevant description of the status transition method in the embodiments of the present application.

FIG. 16 is a schematic diagram of a structure of a communication device 1600 according to an embodiment of the present application. The communication device may be a terminal device or a network device. The communication device 1600 shown in FIG. 16 includes a processor 1610, which may call and run a computer program from a memory to implement the methods in the embodiments of the present application.

Optionally, as shown in FIG. 16, the communication device 1600 may further include a memory 1620. Herein, the processor 1610 may call and run a computer program from the memory 1620 to implement the methods in embodiments of the present application.

Herein, the memory 1620 may be a separate device independent of the processor 1610, or may be integrated in the processor 1610.

Optionally, as shown in FIG. 16, the communication device 1600 may further include a transceiver 1630, and the processor 1610 may control the transceiver 1630 to communicate with another device. Specifically, the transceiver 1630 may send information or data to another device or receive information or data sent by another device.

Herein, the transceiver 1630 may include a transmitter and a receiver. The transceiver 1630 may further include antennas, a quantity of which may be one or more.

Optionally, the communication device 1600 may be specifically the network device according to the embodiments of the present application, and the communication device 1600 may implement the corresponding processes implemented by the network device in various methods in the embodiments of the present application, which will not be repeated here for brevity.

Optionally, the communication device 1600 may be specifically the mobile terminal/terminal device according to the embodiments of the present application, and the communication device 1600 may implement the corresponding processes implemented by the mobile terminal/terminal device in various methods in the embodiments of the present application, which will not be repeated here for brevity.

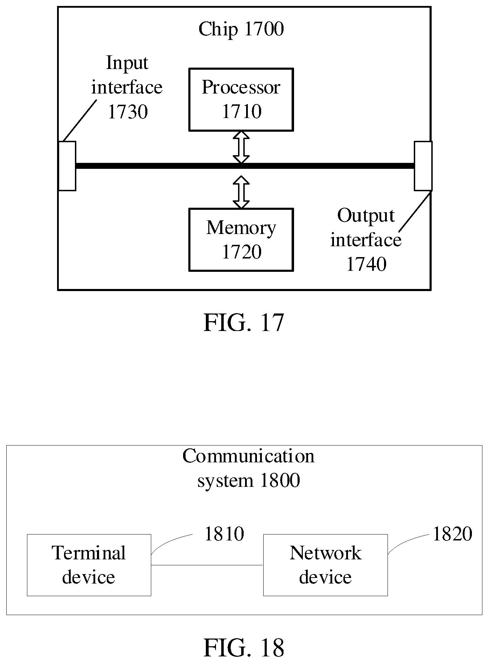

FIG. 17 is a schematic diagram of a structure of a chip according to an embodiment of the present application. A chip 1700 shown in FIG. 17 includes a processor 1710 that may call and run a computer program from a memory to implement the methods in embodiments of the present application.

Optionally, as shown in FIG. 17, the chip 1700 may further include a memory 1720. Herein, the processor 1710 may call and run a computer program from the memory 1720 to implement the methods in embodiment of the present application.

Herein, the memory 1720 may be a separate device independent of the processor 1710, or may be integrated in the processor 1710.

Optionally, the chip 1700 may further include an input interface 1730. Herein, the processor 1710 may control the input interface 1730 to communicate with another device or chip. Specifically, the processor 1710 may obtain information or data sent by another device or chip.

Optionally, the chip 1700 may further include an output interface 1740. Herein, the processor 1710 may control the output interface 1740 to communicate with another device or chip. Specifically, the processor 1710 may output information or data to another device or chip.

Optionally, the chip may be applied to the network device in the embodiments of the present application, and the chip may implement the corresponding flow implemented by the network device in the various methods in the embodiments of the present application, which will not be repeated here for brevity.

Optionally, the chip may be applied to the mobile terminal/terminal device in the embodiments of the present application, and the chip may implement the corresponding flow implemented by the mobile terminal/terminal device in the various methods in the embodiments of the present application, which will not be repeated here for brevity.

It should be understood that the chip mentioned in the embodiments of the present application may also be referred to as a system-level chip, a system chip, a chip system, or a system chip on a chip, etc.

FIG. 18 is a schematic block diagram of a communication system 1800 according to an embodiment of the present application. As shown in FIG. 18, the communication system 1800 includes a terminal device 1810 and a network device 1820.

The terminal device 1810 may be configured to implement corresponding functions implemented by the terminal device in the above-mentioned methods, and the network device 1820 may be configured to implement corresponding functions implemented by the network device in the above-mentioned methods, which will not be repeated here for brevity.

It should be understood that the processor in the embodiments of the present application may be an integrated circuit chip with a capability for processing signals. In an implementation process, various acts of the method embodiments described above may be completed through an integrated logic circuit of hardware in a processor or instructions in a form of software. The above processor may be a general purpose processor, a Digital Signal Processor (DSP), an Application Specific Integrated Circuit (ASIC), a Field Programmable Gate Array (FPGA), or another programmable logic device, a discrete gate or a transistor logic device, or a discrete hardware component. The processor may implement or perform various methods, acts, and logical block diagrams disclosed in the embodiments of the present application. The general purpose processor may be a microprocessor, or the processor may also be any conventional processor, or the like. The acts of the methods disclosed in the embodiments of the present application may be directly embodied to be performed by a hardware decoding processor, or may be performed by a combination of hardware in the decoding processor and software modules. The software modules may be located in a storage medium which is mature in the art, such as a Random Access Memory, a flash memory, a Read Only Memory, a Programmable Read Only Memory, or an electrically erasable programmable memory, or a register. The storage medium is located in a memory, and a processor reads information in the memory and completes the acts of the above methods in combination with its hardware.

It should be understood that the memory in the embodiments of the present application may be a transitory memory or a non-transitory memory, or may include both transitory and non-transitory memory. The non-transitory memory may be a Read Only Memory (ROM), a Programmable Read Only Memory (PROM), an Erasable Programmable Read Only Memory (EPROM), an Electrically Erasable Programmable Read Only Memory (EEPROM), or a flash memory. The transitory memory may be a Random Access Memory (RAM), which is used as an external cache. As an example, but not as a restriction, many forms of RAMs are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It should be noted that the memories of the systems and methods described herein are intended to include, but are not limited to, these and any other suitable types of memories.

It should be understood that, the foregoing memories are examples for illustration and should not be construed as limitations. For example, the memory in the embodiments of the present application may be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch link DRAM (SLDRAM), a Direct Rambus RAM (DR RAM), or the like. That is, the memories in the embodiments of the present application are intended to include, but are not limited to, these and any other suitable types of memories.

An embodiment of the present application further provides a computer readable storage medium configured to store a computer program.

Optionally, the computer readable storage medium may be applied to a network device in an embodiment of the present application, and the computer program enables a computer to perform the corresponding processes implemented by the network device in various methods according to the embodiments of the present application, which will not be repeated here for brevity.

Optionally, the computer readable storage medium may be applied to the mobile terminal/terminal device in the embodiments of the present application, and the computer program enables a computer to perform the corresponding processes implemented by the mobile terminal/terminal device in various methods according to the embodiments of the present application, which will not be repeated here for brevity.

An embodiment of the present application further provides a computer program product, including computer program instructions.

Optionally, the computer program product may be applied to a network device in an embodiment of the present application, and the computer program instructions enable a computer to perform the corresponding processes implemented by the network device in various methods according to the embodiments of the present application, which will not be repeated here for brevity.

Optionally, the computer program product may be applied to the mobile terminal/terminal device in the embodiments of the present application, and the computer program instructions enable a computer to perform the corresponding processes implemented by the mobile terminal/terminal device in various methods according to the embodiments of the present application, which will not be repeated here for brevity.

An embodiment of the present application further provides a computer program.

Optionally, the computer program may be applied to a network device in an embodiment of the present application. When the computer program is run on a computer, the computer is enabled to perform the corresponding processes implemented by the network device in various methods according to the embodiments of the present application, which will not be repeated here for brevity.

Optionally, the computer program may be applied to the mobile terminal/terminal device in the embodiments of the present application. When the computer program is run on a computer, the computer is enabled to perform the corresponding processes implemented by the mobile terminal/terminal device in various methods according to the embodiments of the present application, which will not be repeated here for brevity.

Those of ordinary skill in the art will recognize that units and algorithm acts of various examples described in connection with the embodiments disclosed herein may be implemented in electronic hardware, or a combination of computer software and electronic hardware. Whether these functions are implemented in a form of hardware or software depends on a specific application and a design constraint of a technical solution. Those skilled in the art may use different methods to implement the described functions for each particular application, but such implementation should not be considered to be beyond the scope of the present application.

Those skilled in the art may clearly understand that for convenience and conciseness of description, specific working processes of the systems, apparatuses, and units described above may refer to the corresponding processes in the aforementioned method embodiments, and details will not be repeated here.

In several embodiments according to the present application, it should be understood that the disclosed systems, apparatuses, and methods may be implemented in other ways. For example, the apparatus embodiments described above are only illustrative, for another example, a division of the units is only a logical function division, and there may be other division manners in actual implementation. For example, multiple units or components may be combined or integrated into another system, or some features may be ignored or not executed. In addition, mutual coupling or direct coupling or communication connection shown or discussed may be indirect coupling or communication connection between apparatuses or units through some interfaces, and may be in electrical, mechanical, or other forms.

The units described as separated components may or may not be physically separated, and components shown as units may or may not be physical units, i.e., they may be located in one place or may be allocated over multiple network units. Some or all of the units may be selected according to practical needs to achieve purposes of solutions of the embodiments.

In addition, various functional units in various embodiments of the present application may be integrated in one processing unit, or various units may be physically present separately, or two or more units may be integrated in one unit.

The functions may be stored in a computer readable storage medium if implemented in a form of a software functional unit and sold or used as a separate product. Based on this understanding, technical solutions of the present application, in essence, or a part contributing to the existing art, or part of the technical solutions, may be embodied in a form of a software product stored in a storage medium, including several instructions for enabling a computer device (which may be a personal computer, a server, or a network device, etc.) to perform all or part of the acts of the methods described in various embodiments of the present application. And the aforementioned storage medium includes various media, such as a U disk, a mobile hard disk, a Read-Only Memory (ROM), a Random Access Memory (RAM), a magnetic disk, or an optical disk, etc., which may store program codes.

The protection scope of the present application should be subject to the protection scope of the claims.

## Claims

1. A status transition method, **characterized by** comprising:
receiving, by a master node, a third notification message sent by a terminal device when a Secondary Cell Group, SCG, is in an inactive state, wherein the third notification message is used for informing the master node to trigger the SCG to enter an active state,
sending, by the master node, a first request message to a secondary node, wherein the first request message is used for requesting the SCG to enter the active state, and
sending, by the master node, a second notification message to the terminal device, wherein the second notification message is used for informing the terminal device that the SCG enters the active state.

2. The method according to claim 1, wherein,
the second notification message is further used for informing the terminal device whether to change a Primary Secondary Cell, PSCell.

3. The method according to claim 2, wherein,
when there is a change of the PSCell of the terminal device, the second notification message further carries identification information of the changed PSCell.

4. A terminal device, **characterized by** comprising:
a determining unit (1501), configured to determine that there are uplink data to be sent to a secondary node;
a sending unit (1502), configured to send a third notification message to a master node when a Secondary Cell Group, SCG, is in an inactive state, wherein the third notification message is used for informing the master node to trigger the SCG to enter an active state; and
a receiving unit, configured to receive a second notification message from the master node, wherein the second notification message is used for informing the terminal device that the SCG enters the active state.

5. The terminal device according to claim 4, wherein, the third notification message is carried by a Radio Resource Control, RRC, signaling or a Media Access Control Control Element, MAC CE, on a master node.

6. The terminal device according to claim 4 or 5, wherein, the third notification message contains N bearer identifiers, wherein N is an integer greater than 0, and the bearer identifier is used for indicating a Data Radio Bearer, DRB, identifier of a bearer on which there is uplink data sending.

7. The terminal device according to any one of claims 4 to 6, wherein the determining unit (1501) is configured to determine that there are uplink data to be transmitted on an SCG bearer.

## Patentansprüche

1. Statusübergangsverfahren, **dadurch gekennzeichnet, dass** es umfasst:
Empfangen, durch einen Hauptknoten, einer durch eine Endgerätvorrichtung gesandten dritten Benachrichtigungsnachricht, wenn eine sekundäre Zellengruppe, SCG, in einem inaktiven Zustand ist, wobei die dritte Benachrichtigungsnachricht verwendet wird, den Hauptknoten zu informieren, die SCG auszulösen, in einen aktiven Zustand einzutreten,
Senden, durch den Hauptknoten, einer ersten Anforderungsnachricht an einen sekundären Knoten, wobei die erste Anforderungsnachricht verwendet wird, die SCG anzufordern, in den aktiven Zustand einzutreten, und
Senden, durch den Hauptknoten, einer zweiten Benachrichtigungsnachricht an die Endgerätvorrichtung, wobei die zweite Benachrichtigungsnachricht verwendet wird, die Endgerätvorrichtung zu informieren, dass die SCG in den aktiven Zustand eintritt.

2. Verfahren nach Anspruch 1, wobei,
die zweite Benachrichtigungsnachricht ferner verwendet wird, die Endgerätvorrichtung zu informieren, ob sie zu einer primären sekundären Zelle, PSCell, wechseln soll.

3. Verfahren nach Anspruch 2, wobei,
wenn eine Änderung der PSCell der Endgerätvorrichtung vorliegt, die zweite Benachrichtigungsnachricht ferner Identifizierungsinformationen der geänderten PSCell trägt.

4. Endgerätvorrichtung, **dadurch gekennzeichnet, dass** sie umfasst:
eine Bestimmungseinheit (1501), konfiguriert zum Bestimmen, dass Aufwärtsstreckendaten vorhanden sind, die an einen sekundären Knoten gesandt werden sollen;
eine Sendeeinheit (1502), konfiguriert zum Senden einer dritten Benachrichtigungsnachricht an einen Hauptknoten, wenn eine sekundäre Zellengruppe, SCG, in einem inaktiven Zustand ist, wobei die dritte Benachrichtigungsnachricht verwendet wird, den Hauptknoten zu informieren, die SCG auszulösen, in einen aktiven Zustand einzutreten; und
eine Empfangseinheit, konfiguriert zum Empfangen einer zweiten Benachrichtigungsnachricht von dem Hauptknoten, wobei die zweite Benachrichtigungsnachricht verwendet wird, die Endgerätvorrichtung zu informieren, dass die SCG in den aktiven Zustand eintritt.

5. Endgerätvorrichtung nach Anspruch 4, wobei die dritte Benachrichtigungsnachricht durch eine Funkbetriebsmittelsteuerung- bzw. RRC-Signalisierung oder ein Medienzugangssteuerung-Steuerelement, MAC CE, auf einem Hauptknoten getragen wird.

6. Endgerätvorrichtung nach Anspruch 4 oder 5, wobei die dritte Benachrichtigungsnachricht N Trägerkennungen enthält, wobei N eine ganze Zahl größer als 0 ist und die Trägerkennung verwendet wird, eine Datenfunkträger- bzw. DRB-Kennung eines Trägers, auf dem Aufwärtsstreckendaten gesandt werden, anzugeben.

7. Endgerätvorrichtung nach einem der Ansprüche 4 bis 6, wobei die Bestimmungseinheit (1501) konfiguriert ist zum Bestimmen, dass Aufwärtsstreckendaten vorhanden sind, die auf einem SCG-Träger übertragen werden sollen.

## Revendications

1. Procédé de transition d'état, **caractérisé en ce qu'**il comporte :
la réception, par un nœud maître, d'un troisième message de notification émis par un dispositif terminal lorsqu'un groupe de cellules secondaires, SCG, est dans un état inactif, le troisième message de notification étant utilisé pour informer le nœud maître qu'il convient de déclencher l'entrée du SCG dans un état actif,
l'envoi, par le nœud maître, d'un premier message de demande à un nœud secondaire, le premier message de demande étant utilisé pour demander au SCG d'entrer dans l'état actif, et
l'envoi, par le nœud maître, d'un deuxième message de notification au dispositif terminal, le deuxième message de notification étant utilisé pour informer le dispositif terminal que le SCG entre dans l'état actif.

2. Procédé selon la revendication 1,
le deuxième message de notification étant en outre utilisé pour informer le dispositif terminal du fait qu'il convient ou non de modifier une cellule secondaire principale, PSCell.

3. Procédé selon la revendication 2,
Lorsqu'il y a un changement de la PSCell du dispositif terminal, le deuxième message de notification transportant en outre des informations d'identification de la PSCell modifiée.

4. Dispositif terminal, **caractérisé en ce qu'**il comporte :
une unité (1501) de détermination, configurée pour déterminer qu'il existe des données de liaison montante à envoyer à un nœud secondaire ;
une unité (1502) d'émission, configurée pour envoyer un troisième message de notification à un nœud maître lorsqu'un groupe de cellules secondaires, SCG, est dans un état inactif, le troisième message de notification étant utilisé pour informer le nœud maître qu'il convient de déclencher l'entrée du SCG dans un état actif ; et
une unité de réception, configurée pour recevoir un deuxième message de notification en provenance du nœud maître, le deuxième message de notification étant utilisé pour informer le dispositif terminal que le SCG entre dans l'état actif.

5. Dispositif terminal selon la revendication 4, le troisième message de notification étant transporté par une signalisation de commande des ressources radio, RRC, ou un élément de commande de contrôle d'accès au support, MAC CE, sur un nœud maître.

6. Dispositif terminal selon la revendication 4 ou 5, le troisième message de notification contenant N identifiants de supports, N étant un entier supérieur à 0, et l'identifiant de support étant utilisé pour indiquer un identifiant de support radioélectrique de données, DRB, d'un support sur lequel il existe des données de liaison montante en cours d'émission.

7. Dispositif terminal selon l'une quelconque des revendications 4 à 6, l'unité (1501) de détermination étant configurée pour déterminer qu'il existe des données de liaison montante à émettre sur un support de SCG.
